# EUROPEAN PATENT SPECIFICATION

(11) **EP 0 537 261 B1**
(45) Date of publication and mention of the grant of the patent: **20.03.1996**
(21) Application number: 91912805.8
(22) Date of filing: 03.07.1991
(51) Int. Cl.: E02B 3/04, E02B 3/12

(54) **STRUCTURES INCORPORATING USED VEHICLE TYRES**
BAUWERKE AUS GEBRAUCHTEN FAHRZEUGREIFEN
STRUCTURES INCORPORANT DES PNEUS DE VEHICULES USAGES

(30) Priority: 05.07.1990 GB 9014905; 07.08.1990 GB 9017292
(43) Date of publication of application: 21.04.1993
(73) Proprietor: SORRELL, Anthony Peter, Woodbridge, Suffolk IP12 2NY (GB)
(72) Inventor: SORRELL, Anthony Peter, Woodbridge, Suffolk IP12 2NY (GB)
(74) Representative: Copp, David Christopher
(86) International application number: GB9101085
(87) International publication number: WO9201118

(56) References cited:
- AT-A- 368 222
- DE-A- 2 324 214
- DE-A- 2 514 830
- FR-A- 2 643 400
- US-A- 3 842 606
- SOVIET INVENTIONS ILLUSTRATED Derwent Publications ,Week 9007, Abstract nr. 50164/07 , March 28 ,1990 & SU-A-1476041 (BLACK SEA SHIPPING) 30-04-1989
- SOVIET INVENTIONS ILLUSTRATED Derwent Publications ,Week E08,Abstract Nr. C0808 ,E/08,April 7, 1982 & SU-A 829762(GEORHYDROTECH MELI) 15-05-1981

## Description

This invention relates to structures incorporating used vehicle tyres. Examples of such structures are sea defence systems for defending a coastline against erosion by the sea, and retaining walls such as are used for retaining river walls or for retaining earth walls.

It has previously been proposed, for example in British patents 1 523 552 and 1 539 767, to use old vehicle tyres for erosion-preventing structures. In 1 523 552, tyres are skewered onto a horizontal flat bar. In 1 539 767, tyres are clipped or bolted together in staggered piles.

Document SU-A-1 476 041 discloses a barrier structure with a body composed of tyres arranged side-by-side with their planes vertical. The tyres are connected to each other and to adjacent rows of side-by side tyres by junction elements.

Document DE-A-25 14 830 discloses structures which use old vehicle tyres in various configurations. In one configuration, tyres are arranged in piles and are each joined to the adjacent tyre in the pile by metal clamps, by U-shaped tyre bead shoes, by adhesive or by placing wires or rods through the tyre side walls. Tyres mounted together in this way are used as tubes, ie the inner passage of the tyres is used as a conduit. This document also discloses an arrangement of tyres in one plane with tyres linked to one another to form a linear chain or a two-dimensional net.

According to the present invention, there is provided a structure comprising interlinked used vehicle tyres, the tyres being fastened together in piles with the tyres in each pile being arranged coaxially, characterised in that piles of tyres are fastened together in at least one row, with all the tyres being fastened together by cables which pass through the central apertures of adjacent tyres, thus allowing a degree of flexibility between the tyres so that the tyres can move to a sufficient extent for them to conform to local conditions.

References in this specification to 'cables' includes all equivalent types of fasteners, for example ropes, chains, wire cables, straps or webbing.

The use of cables allows a degree of flexibility between the tyres so that the tyres can move to a sufficient extent for them to conform to local conditions, either on a coastline or in a retaining wall. Where chains are used, the advantage is obtained that tyres can be simply added to or removed from the structure by undoing chain fasteners, or connecting further lengths of chain to the links. Instead of chains, it is possible to use other types of flexible fasteners, for example ropes or webbing. It is particularly advantageous to use a material which is similar in its wear resistance and flexibility to the material of the tyres themselves.

The structure may be made up by fastening together three piles to form a building unit, and then building the structure with such units. At least the bottom tyres in each pile may be buried in the ground.

The invention may be used as a sea defence system comprising a structure as set forth above, wherein the row or rows of tyre piles extend parallel to a coastline and the tyres are fastened together so that a force impacting at a point along the tyre row(s) is resisted by a tension along the length of the row. At least the ends of the row are preferably anchored to the ground.

An anti-scour mat made up of a plurality of interlinked tyres, which all lie in the same plane, may be connected to the bottom of the row of tyres.

One or more piers, constructed of piles of tyres, may be provided. These piers can extend one one side of the row of tyres. Posts may be driven through the centre of some or all of the piles of tyres forming the piers.

A protective wall may be attached to the row of tyres on the side facing the sea.

The invention may also be embodied in a river wall defence system comprising a structure as set forth above, wherein the row or rows of tyre piles extend parallel to the river bank and the tyres are fastened together and form an elongate barrier along the river bank.

Alternatively the invention may be embodied in a wall retention system comprising a structure as set forth above, wherein the row or rows of tyre piles extend parallel to the line of the wall, the tyres are fastened together andform an elongate barrier along the line of the wall.

The tyres are laid in piles with one tyre being laid directly on top of another so that when the pile is complete, the central apertures of all the tyres register with one another and the central void of all the tyres can be filled with filling material through the top of the pile.

Used vehicle tyres have the great advantage that they are readily available and can be acquired at little or no cost. They are very resistant to corrosion and degradation in the aggressive atmosphere on the sea coast. Because they are flexible they can absorb some of the force from the sea by the yielding of individual tyres against that force, whilst the wall of tyres holds firm to resist the force.

In order to avoid an obtrusive appearance, the tyres may be painted to blend in with their surroundings, and techniques for painting tyres are known.

The invention will now be further described, by way of example, with reference to the accompanying drawings, in which:
Figure 1 is a cross-sectional view through an unprotected coastline;
Figure 2 is a cross-section through a coastline protected by a sea defence system in accordance with the invention;
Figure 3 is a view corresponding to Figure 2 but showing some additional features;
Figure 4 is a plan view of another coastline protected by a sea defence system in accordance with the invention;
Figure 5 is a view from the sea of the protected coastline of Figure 3;
Figure 6 is a view corresponding to Figure 2 but showing the additional of a concealing wall;
Figure 7 is a plan view similar to Figure 4, but showing an alternative embodiment;
Figure 8 shows a river wall defence system in cross-section;
Figure 9 shows an earth wall retaining system in accordance with the invention; and
Figure 10 shows a structural unit for use as part of the invention.

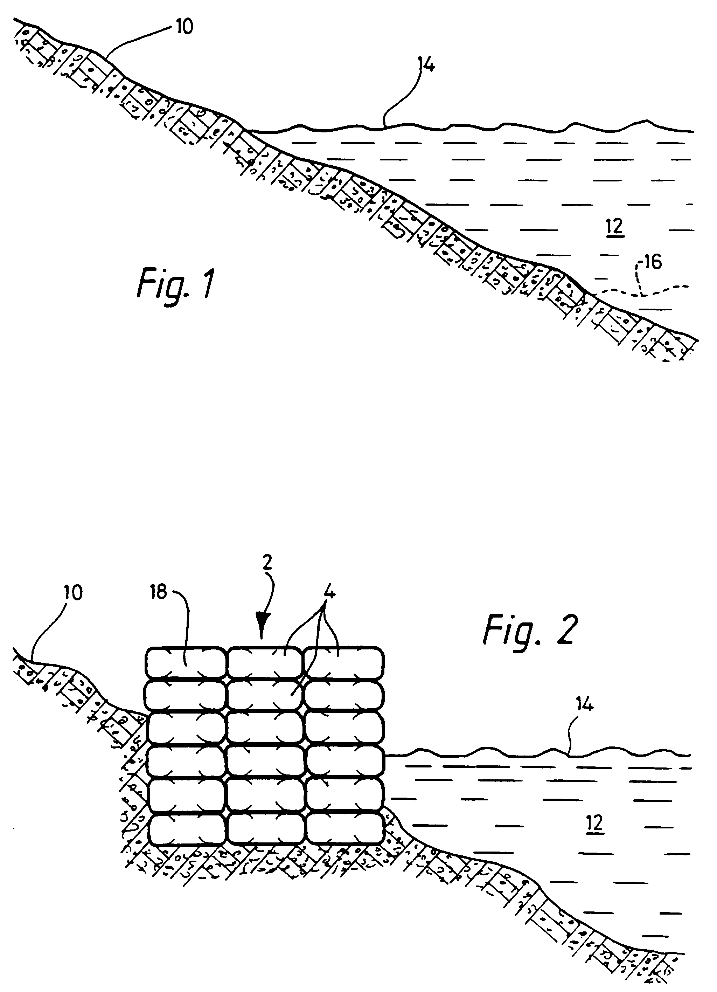

Figure 1 shows a shelving coastline at 10, with the sea shown at 12. The high water level is indicated at 14, and the low water level by a dotted line at 16.

It is well known that the force of the sea breaking on the coastline, especially at its high tide level, causes erosion of the coastline whether the coastline is in the form of a beach or a cliff. Various measures have been proposed to defeat this erosion.

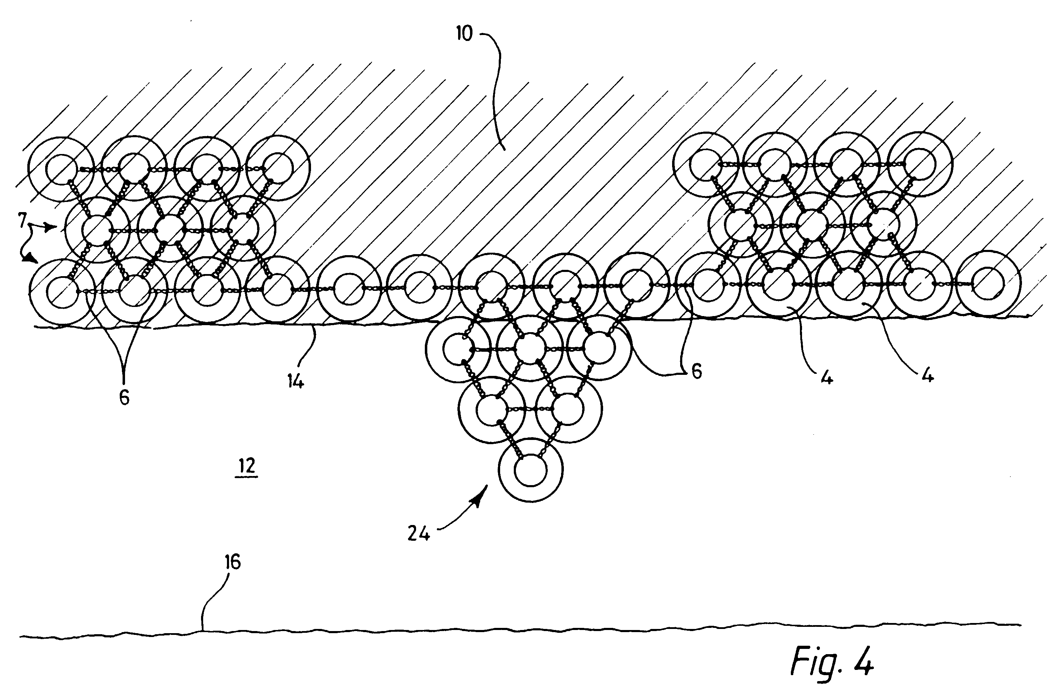

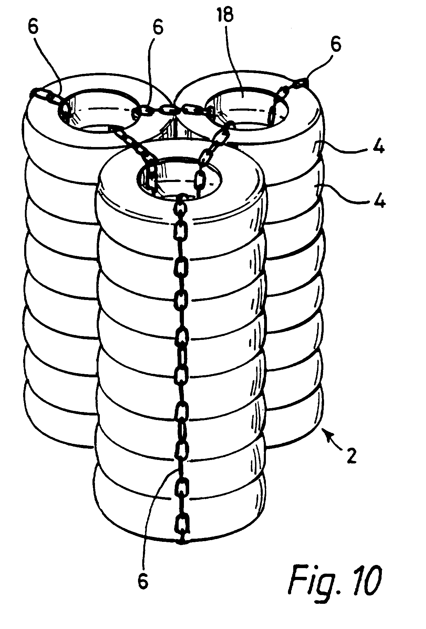

In accordance with the invention, piles 2 of used vehicle tyres 4 are arranged as shown in the Figures. The tyres 4 are piled one on top of another, and the piles are then placed in rows 7 to form a wall which extends parallel to the shore (see for example Figure 4). Most importantly however all the tyres 4 are linked to one another so that each tyre is held in place by its neighbours and by the tyres above and below it (see Figure 10). The tyres are linked to one another by chains 6 which are pulled as tight as possible in order to secure the tyres and to reduce the amount which they are able to move. In Figure 2, the chains have been omitted from the drawing, but in practice each tyre will be secured to its neighbours immediately above and below as well as on either side and behind.

With the tyres arranged one on top of another as shown in Figure 2, there will be an open vertical channel 18 which extends through all the tyres 4 in a pile and through which filling material can be introduced to stabilise the pile. The filling material will normally be whatever local material is available, eg sand or shingle from the beach itself.

Depending on the nature and the steepness of the beach, the inland piles of tyres may be completely buried under the beach material, or they may be exposed as shown in Figure 2.

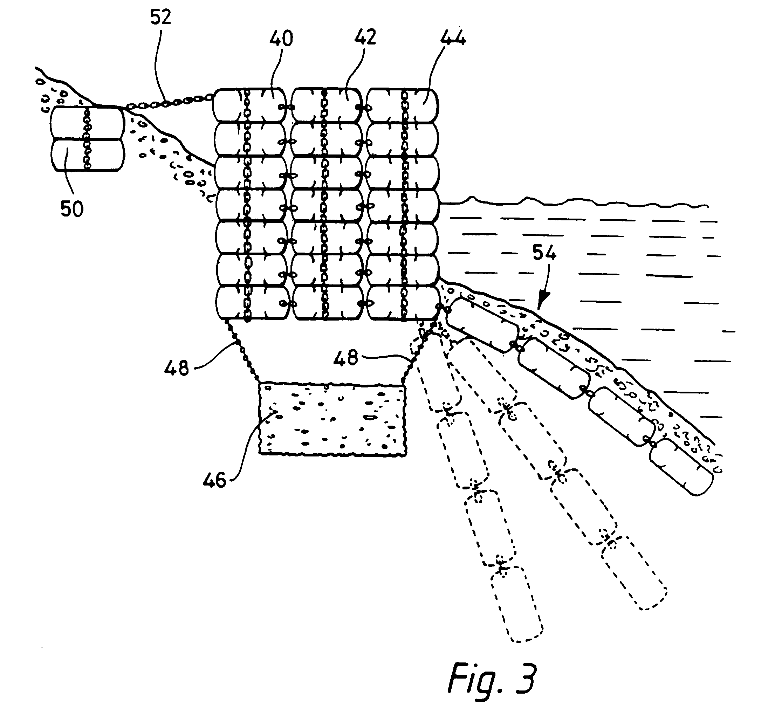

Figure 3 shows three rows of tyres 40, 42, 44 all linked together by chains as previously described. To ensure stability of this tyre construction, concrete anchor blocks 46 are embedded in the shore, and the body of tyres is connected to these blocks by chains 48. Also, to support the top ends of the rows of tyres, where they may be exposed by the action of the sea and by the shape of the shore, anchor points 50 made up of further sets of tyres are embedded in the shore inland of the rows of tyres, and the main tyre bodies are connected to these anchor points by further chains 52.

On the sea shore, scour is a problem which tends to remove the shore material from beneath any fixed structure built on the shore. To prevent this happening, an anti-scour mat 54 can be used. The tyres in the mat may be filled with concrete so that they present a substantially continuous surface against the action of the sea. The tyres will be linked together to form a mat or apron which will initially be embedded in the shore a small distance below the shore surface, and connected to the bottom of the row 44 of tyres. If scour continues to occur, the mat will move as the shore profile moves to the positions indicated in dotted lines, but will play a substantial role in reducing the action of scour in undermining the wall formed by the rows of tyres.

Turning now to Figure 4, it will be seen how the tyres can be arranged in a hexagonal array in front of and behind the row 7, with all the tyres being interconnected by chains 6. Again, depending on the nature of the coastline the wall may be one row deep or more. It is however important that all the tyres in the front row should be linked to one another along the length of the coastline so that when a wave breaks on the wall and tries to push the tyres out of line, then this force will be resisted by a tension in the front row.

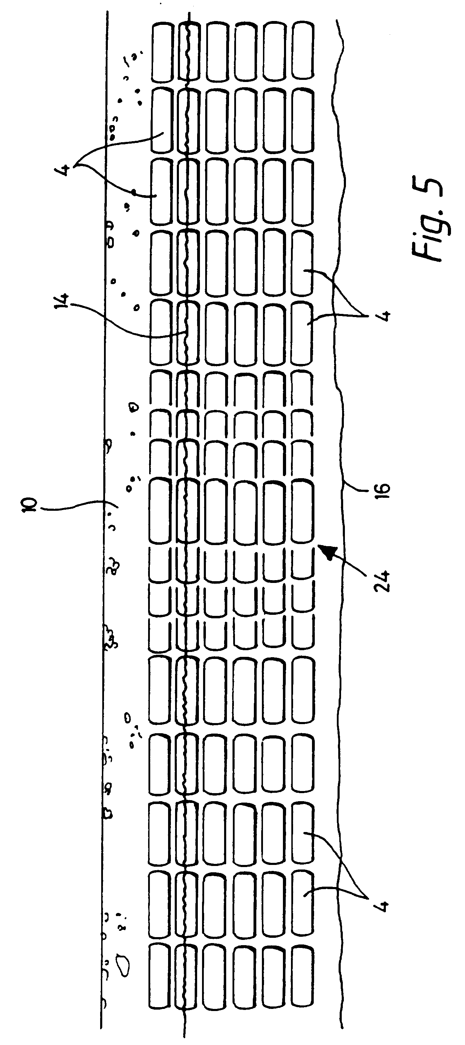

Figure 5 also shows the construction of a breakwater 24 formed by linking together piles of tyres so that they extend out into the sea. This breakwater will be effective in a known manner to prevent or to reduce the effect of a wave crest travelling along the length of the coastline and carrying material from the coastline with it as it goes.

Because of the flexible nature of the barrier shown here, the tyre piles will drop down to fill any void left as a result of the action of scour, and if necessary, some of the chains 6 can be released to allow certain of the tyres to drop down into a void beneath.

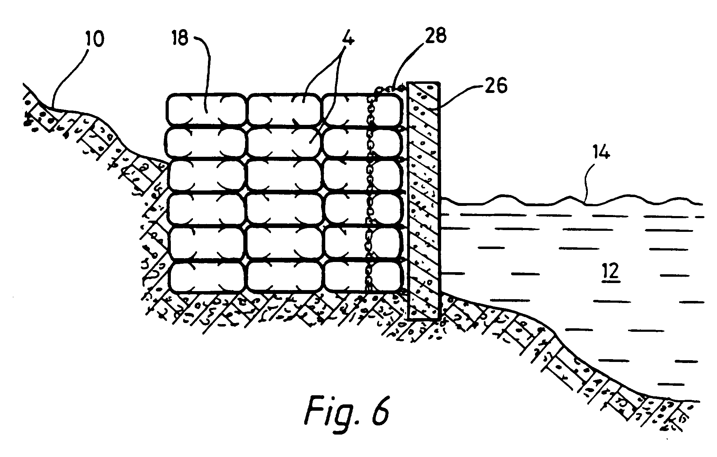

Because used vehicle tyres may be unsightly, it may be possible to build a concealing wall 26 as shown in Figure 6 to hide the tyres 4 from view. However in this case the wall 26 will just be cosmetic in nature, and the strength of the sea defence system will be provided by the piles of tyres. The wall 26 can be built for example of concrete and may be secured to the wall by chains 28.

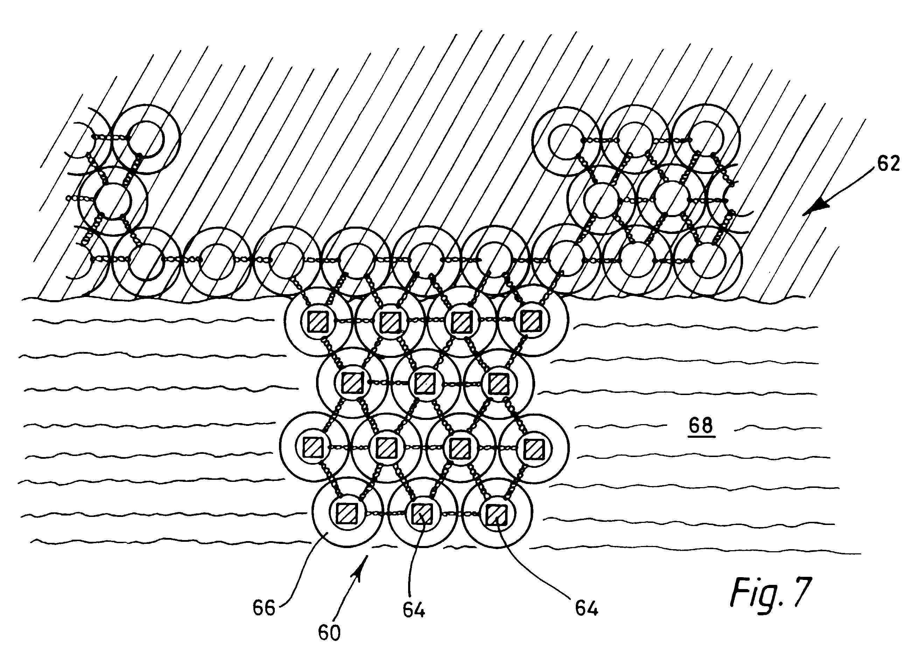

In Figure 7 a quay or breakwater 60 is formed by interlinked tyres which are attached to a sea defence construction 62 on the land. The breakwater 60 is formed by wooden posts 64 which are driven into the sea bed and then have one or more tyres 66 dropped over the post, with all the tyres being linked to one another in the manner already described. The presence of the posts helps to locate the arrangement of interlinked tyres in the sea 68, and the tyres and the interlinking structure means that the demands on the posts themselves will be less than in a conventional breakwater and the posts can therefore be of a smaller dimension than might otherwise be expected.

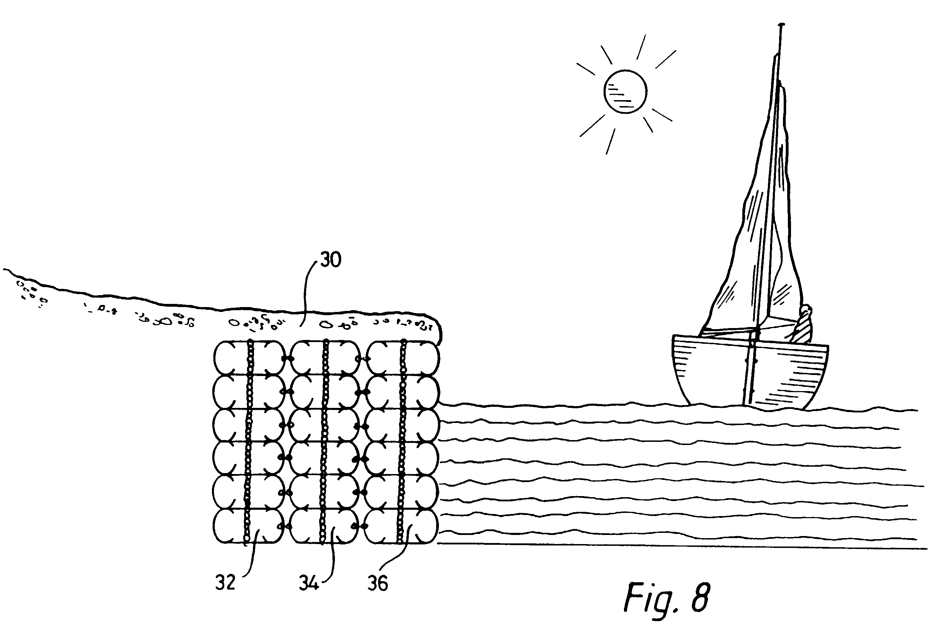

Figure 8 shows a scheme for bank retention on a river wall. In this case the arrangement of tyres is similar to that described with reference to Figure 2. It will be seen that the natural bank material is extended at 30 to cover the three rows of tyres 32, 34, 36. In this way the tyres are substantially hidden from view.

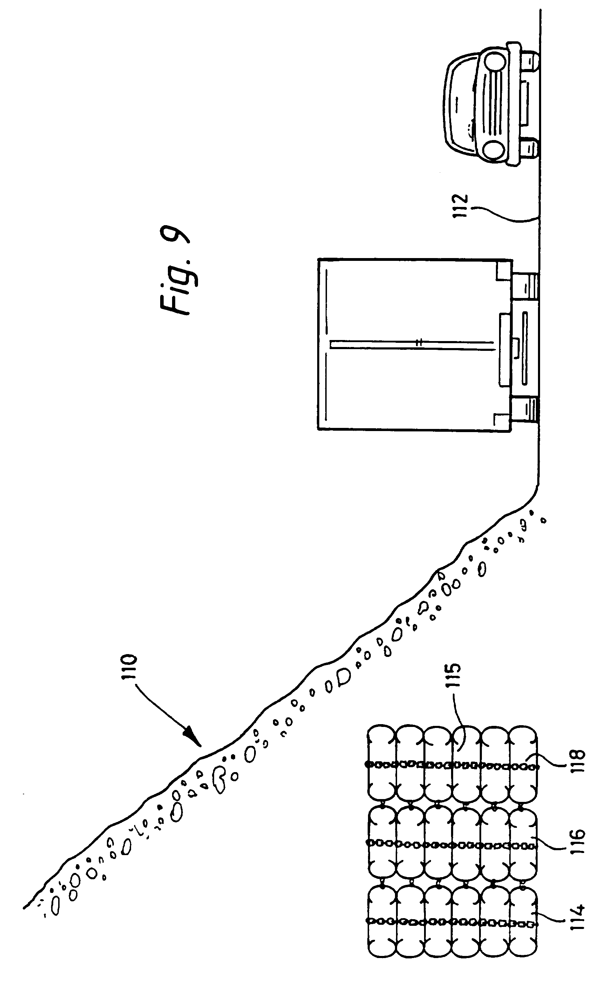

Figure 9 shows a cross section through a bank 110 above a road 112. The bank has been stabilised by embedding tyres 115 within the bank, at the level of the roadway 112. The tyres form three parallel rows 114, 116, 118, each of which extend parallel to the surface of the bank 110 and all of which are linked to one another. As previously explained, the most important linkage is that parallel to the length of the bank 110, but the tyres are also linked to the adjacent tyres above and below and to the tyres in front and behind. In this embodiment, the tyres are completely buried in the bank 110 and are not visible. The central apertures of the tyres will be filled with local ballast material typically in the form of soil from the site. The presence of the tyres in this position will stabilise and retain the bank 110.

The invention thus provides a support structure which can be constructed with a minimum of cost, and without any specialised equipment. Where the structure is used as a sea defence system, the piles of tyres will bed themselves into the coastline and will have sufficient resilience to absorb some of the force of the sea whilst the linking together of the tyres will provide sufficient strength to resist erosion.

The invention however also contemplates the use of interlinked motor vehicle tyres to support and strengthen a number of engineering structures both at the interface between land and sea, and entirely on the land. By interlinking the tyres as described, and filling them with ballast material as available on site, a stable structure is achieved which can be built at low cast because tyres are available readily, and without any particular degree of skill because all that is required is that the tyres be linked to one another as shown.

## Claims

1. A structure comprising interlinked used vehicle tyres, the tyres (4) being fastened together in piles (2) with the tyres in each pile being arranged coaxially, characterised in that piles of tyres are fastened together in at least one row (7), with all the tyres being fastened together by cables (6) which pass through the central apertures of adjacent tyres, the structure having a degree of flexibility so that the tyres can move to a sufficient extent for them to conform to local conditions.

2. A structure as claimed in Claim 1, wherein three piles (2) are fastened together to form a building unit, and the structure is built of such units.

3. A structure as claimed in any preceding claim, wherein at least the bottom tyres (4) in each pile are buried in the ground.

4. A structure as claimed in Claim 1 being used in a sea defence system, wherein the row or rows (7) of tyre piles (2) extend parallel to a coastline and the tyres are fastened together so that a force impacting at a point along the tyre row(s) is resisted by a tension along the length of the row.

5. A structure as claimed in Claim 4, wherein the ends of the row (7) are anchored to the ground.

6. A structure as claimed in any one of Claims 4 to 5, wherein an anti-scour mat (54) made up of a plurality of interlinked tyres, which all lie in the same plane, is connected to the bottom of the row (44) of tyres.

7. A structure as claimed in any one of Claims 4 to 6, including one or more piers (24), constructed of piles of tyres, which piers extend on one side of the row (7) of tyres.

8. A structure as claimed in Claim 7, wherein posts (64) are driven through the centre of some or all of the piles of tyres (66) forming the piers.

9. A structure as claimed in any one of Claims 5 to 8, wherein a protective wall (26) is attached to the row of tyres on the side facing the sea (12).

10. A structure as claimed in Claim 1 being used in a river wall defence system, wherein the row or rows (32, 34, 36) of tyre piles extend parallel to the river bank (30) and the tyres are fastened together and form an elongate barrier along the river bank.

11. A structure as claimed in Claim 1 being used in a wall retention system, wherein the row or rows (114, 116, 118) of tyre piles extend parallel to the line of the wall (110), the tyres are fastened together and form an elongate barrier along the line of the wall.

## Patentansprüche

1. Aufbau, der miteinander verbundene, gebrauchte Fahrzeugreifen umfaßt, wobei die Reifen (4) in Stapeln (2) zusammen befestigt und die Reifen in jedem Stapel koaxial angeordnet sind,
dadurch gekennzeichnet,
daß die Stapel von Reifen in wenigstens einer Reihe (7) zusammen befestigt sind durch Kabel, Ketten, Seile od. dgl. Befestigungsmittel (6), welche durch die zentralen Öffnungen benachbarter Reifen verlaufen, wobei der Aufbau einen Grad von Flexibilität aufweist, so daß sich die Reifen um einen ausreichenden Betrag bewegen können, um sich an die örtlichen Bedingungen anzupassen.

2. Aufbau nach Anspruch 1,
bei dem drei Stapel (2) zusammen befestigt sind, um eine Baueinheit zu bilden und der Aufbau aus derartigen Einheiten aufgebaut ist.

3. Aufbau nach einem der vorhergehenden Ansprüche,
bei dem mindestens die unteren Reifen (4) in jedem Stapel in den Boden eingelassen ist.

4. Aufbau nach Anspruch 1,
der in einem Seeschutzsystem verwendet wird, bei dem die Reihe oder Reihen (7) von Reifenstapeln (2) sich parallel zu einer Küste erstrecken und die Reifen zusammen so befestigt sind, daß einer auf einen Punkt entlang der Reifenreihe(n) ausgeübten Kraft ein Zug in Längsrichtung widersteht.

5. Aufbau nach Anspruch 4,
bei dem die Enden der Reihe (7) im Boden verankert sind.

6. Aufbau nach einem der Ansprüche 4 bis 5,
bei dem eine Erosionsschutzmatte (54), die aus einer Vielzahl von miteinander verbundenen Reifen besteht, welche sämtlich in der gleichen Ebene liegen, mit dem Boden der Reihe (44) der Reifen verbunden ist.

7. Aufbau nach einem der Ansprüche 4 bis 6,
welcher eine oder mehrere Molen (24) umfaßt, welche aus Stapeln von Reifen aufgebaut sind, wobei die Molen sich an einer Seite der Reihe (7) der Reifen erstrekken.

8. Aufbau nach Anspruch 7,
bei dem Pfosten (64) durch die Zentren einiger oder sämtlicher der Stapel von Reifen (66), welche die Molen bilden, getrieben sind.

9. Aufbau nach einem der Ansprüche 5 bis 8,
bei dem eine Schutzwand (26) auf der zur See (12) weisenden Seite der Reihe von Reifen angesetzt ist.

10. Aufbau nach Anspruch 1,
der in einem Flußwandschutzsystem verwendet wird, bei dem die Reihe oder Reihen (32, 34, 36) der Reifenstapel sich parallel zum Flußufer (30) erstrecken und die Reifen zusammen befestigt sind und eine entlang des Flußufers sich erstreckende längsgestreckte Barriere bilden.

11. Aufbau nach Anspruch 1,
der in einem Wallhaltesystem verwendet wird, wobei die Reihe oder Reihen (114, 116, 118) der Reifenstapel parallel zu der Längserstreckung des Walls (110) verläuft bzw. verlaufen, die Reifen zusammen befestigt sind und eine entlang der Längserstreckung des Walls verlaufende längsgestreckte Barriere bilden.

## Revendications

1. Une structure comprenant des pneus de véhicules usagés liés entre eux, les pneus (4) étant attachés ensembles et empilés les uns sur les autres (2), les pneus étant disposés de façon coaxialle dans chaque pile, caractériseé par le fait que des piles de pneus sont attachées ensembles de façon à former au moins une rangée (7), les pneus étant attachés ensembles par des cables (6) passant par l'ouverture centrale des pneus adjacents, la structure disposant ainsi d'une certaine flexibilité permettant aux pneus de bouger suffisament afin de pouvoir s'adapter aux conditions locales.

2. Une structure selon la revendication 1, ou trois piles (2) sont attachées ensembles de façon à former une unité de construction, la structure étant formée de telles unités.

3. Une structure selon l'une des revendications précédentes où moins les pneus de dessous de chaque pile sont enterrés dans le sol.

4. Une structure selon la revendication 1, étant utilisée dans un système de défense contre la mer, où la/les rangée(s) (7) de piles de pneus (2) longe(nt) parallèlement la côte et où les pneus sont attachès ensembles de telle façon que, dans le cas où une partie de la/les rangée(s) de pneus reçoit un fort impact, il est possible de résister à ce fort impact grâce à une tension s'exerçant tout au long de la rangée.

5. Un système de défense contre la mer selon la revendication 4, où les extrémités de la rangée (7) sont enfouis dans le sol.

6. Un système de défense contre la mer selon l'une des revendications de 4 à 5, où un tapis anti-frottant (54) composé de plusieurs pneus liés entre eux, tous à plât au même niveau, est rattaché au dessous de la rangée (44) de pneus.

7. Un système de défense contre la mer selon l'une des revendications de 4 à 6, comprenant une ou plusiers jetée(s) (24), construites à partir de piles de pneus, lesquelles jetées s'étendent sur un côté de la de la rangée (7) de pneus.

8. Un système de défense contre la mer selon la revendication 7, où des poteaux sont plantés au centre de certaines ou de toutes les piles de pneus (66) formant les jetées.

9. Un système de défense contre la mer selon l'une des revendications de 4 à 8, où un mur protecteur (26) est rattaché à la rangée de pneus du côté donnant sur la mer (12).

10. Une structure selon la revendication 1, servant de système de protection des berges d'une rivière, où la/les rangée(s) (32, 34, 36) de piles de pneus sont disposée(s) de parallèlement aux berges de la rivière (30) et où les pneus sont attachés ensembles et formant une barrière s'étendant tout au long des berges.

11. Une structure selon la revendication 1, étant utilisée dans un système de maintien des berges d'une rivière, où la/les rangée(s) (114, 116, 118) de piles de pneus est/sont disposée(s) parallèlement au mur (110), les pneus étant attachés ensembles et formant une barrière s'étendant tout au long du mur.
